# EUROPÄISCHE PATENTSCHRIFT

(11) **EP 0 850 694 B1**
(45) Veröffentlichungstag und Bekanntmachung des Hinweises auf die Patenterteilung: **05.03.2003**
(21) Anmeldenummer: 97120051.4
(22) Anmeldetag: 15.11.1997
(51) Int. Cl.: B05B 7/12

(54) **Ventil für eine Sprühbeschichtungseinrichtung mit mindestens zwei Fluidwegen**
Valve for spraying device having at least two fluid conduits
Vanne pour un dispositif de revêtement ayant au moins deux conduits de fluide

(30) Priorität: 27.12.1996 DE 19654514
(43) Veröffentlichungstag der Anmeldung: 01.07.1998
(73) Patentinhaber: ITW Oberflächentechnik GmbH & Co.KG, 63128 Dietzenbach (DE)
(72) Erfinder: Dankert, Manfred, 63322 Rödermark (DE)
(74) Vertreter: Vetter, Ewald Otto, Dipl.-Ing.

(56) Entgegenhaltungen:
- EP-A- 0 359 943
- US-A- 3 841 555
- US-A- 4 426 039

## Beschreibung

Die Erfindung betrifft eine Sprühbeschichtungseinrichtung gemäß dem Oberbegriff von Anspruch 1. Eine derartige Sprühbeschichtungseinrichtung ist aus US 3 841 555 bekannt.

Aus der DE 22 09 896 C2 ist eine Sprühbeschichtungsvorrichtung bekannt, mit welcher flüssiges Beschichtungsmaterial auf einen zu beschichtenden Gegenstand gesprüht werden kann. Das Beschichtungsmaterial strömt über ein Ventil, dessen Ventilkörper eine nadelartige Form hat, zu einer Sprühdüse, an welcher der Zerstäubervorgang durch Druckluft, sogenannte Zerstäuberluft, unterstützt wird. Der Sprühstrahl hat eine runde Querschnittsform.

Der nadelförmige Ventilkörper kann zum Einschalten des Beschichtungsmaterialstromes durch einen Abzugsbügel von Hand betätigt werden, wenn die Sprühvorrichtung eine Hand-Sprühpistole ist, oder durch Druckluft entgegen der Kraft einer Feder betätigt werden, wenn es sich um eine automatische Sprühvorrichtung handelt.

Ferner ist es bekannt, auf den Sprühstrahl von zwei gegenüberliegenden Seiten her Druckluft aufzubringen, sogenannte Formungsluft, um den runden Sprühstrahl in einen flachen Sprühstrahl umzuformen. Außerdem ist es bekannt, Beschichtungsmaterial vor oder nach der Sprühdüse durch Elektroden mit Hochspannung elektrostatisch aufzuladen und Druckluft über die Elektroden zu führen, damit kein Beschichtungsmaterial an ihnen haften kann. Desweiteren ist es bekannt, einen schwachen Druckluftstrom über das vordere Ende der Sprühvorrichtung strömen zu lassen, damit sich an ihn keine zerstäubten Beschichtungsmaterialpartikel ansammeln können. Die Druckluft zur Betätigung des genannten Ventils wird im folgenden Betätigungsluft genannt. Die anderen Druckluftströme, sofern kein bestimmter von ihnen angesprochen wird, werden im folgenden jeweils als "Betriebsluft" oder "Betriebsluftstrom" bezeichnet. Beim gleichzeitigen Einschalten der Betätigungsluft und der Betriebsluftströme besteht die Gefahr, daß Beschichtungsmaterial unkontrolliert versprüht wird, bevor die Betriebsluft wirksam werden kann. Wenn die Betätigungsluft und die Betriebsluftströme gleichzeitig abgeschaltet werden, besteht in entsprechender Weise wiederum die Gefahr, daß der Beschichtungsmaterial-Sprühstrahl nicht mehr ausreichend kontrolliert wird und dadurch Beschichtungsfehler entstehen, oder daß nach dem Abschalten noch Beschichtungsmaterial aus der Sprühvorrichtung tropft. Zur Vermeidung dieser Nachteile sind im Stand der Technik teuere elektromagnetische Mehrventil-Anordnungen und Steuerschaltungen bekannt, durch welche beim Einschalten des Beschichtungsvorganges sichergestellt wird, daß das Ventil für das Beschichtungsmaterial erst dann öffnet, wenn mindestens einer der Betriebsluftströme bereits zuvor eingeschaltet wurde, und daß dieser mindestens eine Betriebsluftstrom erst dann abgeschaltet wird, wenn zuvor der Beschichtungsmaterialstrom abgeschaltet wurde.

Anstelle durch Sprühdüsen kann der Beschichtungsmaterialstrom-auch durch ein Rotationszerstäuberelement oder eine andere Technik versprüht werden.

Die Betriebsluftströme können nur dann einzeln geregelt werden, wenn sie der Sprühvorrichtung in getrennten Leitungen zugeführt werden. Da das Steuergerät, welches die Betriebsluftströme und die Betätigungsluft steuert, über verhältnismäßig lange Leitungen und großem Abstand von der Sprühvorrichtung angeordnet ist, beispielsweise in einem elektrischen Schaltschrank oder im Steuerteil eines Roboters, entstehen lange Verzögerungszeiten bis die betreffende Luft vom Steuergerät zur Sprühvorrichtung gelangt.

Eine Sprühvorrichtung wird nicht nur am Beginn und Ende eines Arbeitstages, sondern während eines Arbeitstages viele hundert mal eingeschaltet und ausgeschaltet, weil der Beschichtungsvorgang zwischen den verschiedenen zu beschichtenden Gegenständen immer ausgeschaltet und dann erneut eingeschaltet werden muß. Die Gegenstände werden normalerweise von automatischen Transportanlagen an einer Sprühstation vorbeigeführt, wo sich die eine oder mehrere Sprühvorrichtungen befinden.

Wenn ein Druckluftstrom erst in der Sprühvorrichtung auf Betriebsluftströme aufgeteilt wird, beispielsweise auf einen Zerstäuberluftstrom und einen Formungsluftstrom, dann kann zwar an der Sprühvorrichtung durch Stellschrauben die Strömungsmenge der Zerstäuberluft und der Formungsluft eingestellt werden, ihre Drücke sind jedoch nicht unabhängig voneinander einstellbar.

Durch die Erfindung soll die Aufgabe gelöst werden, eine Möglichkeit zu schaffen, durch welche ein Spritzen von Beschichtungsmaterial-Klumpen auf das zu beschichtende Objekt beim Einschalten und ein Nachtropfen von Beschichtungsmaterial an der Sprühvorrichtung bei ihrem Ausschalten vermieden werden; durch welche die verschiedenen Luftströme und das Einschalten und Ausschalten des Beschichtungsmaterials getrennt voneinander gesteuert oder geregelt werden können, ohne daß umfangreiche, teuere Steuereinrichtungen oder Multiventilanordnungen erforderlich sind; und durch welche Reaktionsverzögerungen als Folge von langen Fluidleitungen beim Einschalten und Ausschalten vermieden werden.

Diese Aufgabe wird gemäß der Erfindung durch die Merkmale von Anspruch 1 gelöst.

Weitere Merkmale der Erfindung sind in den Unteransprüchen enthalten.

Da anstelle von Luftströmen auch andere Materialströme verwendet werden können, werden sie im folgenden insgesamt als "Fluidströme" bezeichnet. Durch die Erfindung werden alle Fluidströme durch den Druck eines dieser Fluidströme in der neuen Ventileinrichtung gesteuert, ohne daß elektromagnetische oder elektropneumatische Mehrventil-Einrichtungen oder aufwendige Steuerschaltungen erforderlich sind. Die Ventileinrichtung kann gemäß der Erfindung direkt an der Sprühvorrichtung angeordnet werden, so daß die von ihr gesteuerten Fluidströme ohne Zeitverzögerung an der Sprühvorrichtung wirksam werden können. Alle Fluidströme können der Sprühvorrichtung einzeln zugeführt werden.

Die Erfindung wird im folgenden mit Bezug auf die Zeichnungen anhand von bevorzugten Ausführungsformen als Beispiele beschrieben. In den Zeichnungen zeigen
- Fig. 1: eine Sprühbeschichtungseinrichtung nach der Erfindung, teilweise geschnitten;
- Fig. 2: einen vergrößerten Längsschnitt durch eine erste Ausführungsform einer Ventileinrichtung nach der Erfindung in ihrer Schließstellung;
- Fig. 3: die Ventilanordnung von Fig. 2 in Offenstellung;
- Fig. 4: schematisch einen Axialschnitt durch eine zweite Ausführungsform einer Ventileinrichtung nach der Erfindung in Schließstellung;
- Fig. 5: schematisch eine Stirnansicht einer dritten Ausführungsform einer Ventileinrichtung gemäß der Erfindung;
- Fig. 6: schematisch eine Draufsicht auf die Ventilanordnung von Fig. 5,
- Fig. 7: einen vergrößerten Axialschnitt einer dritten Ausführungsform einer Ventilanordnung nach der Erfindung in Schließstellung,
- Fig. 8: die Ventilanordnung von Fig. 7 in Offenstellung.

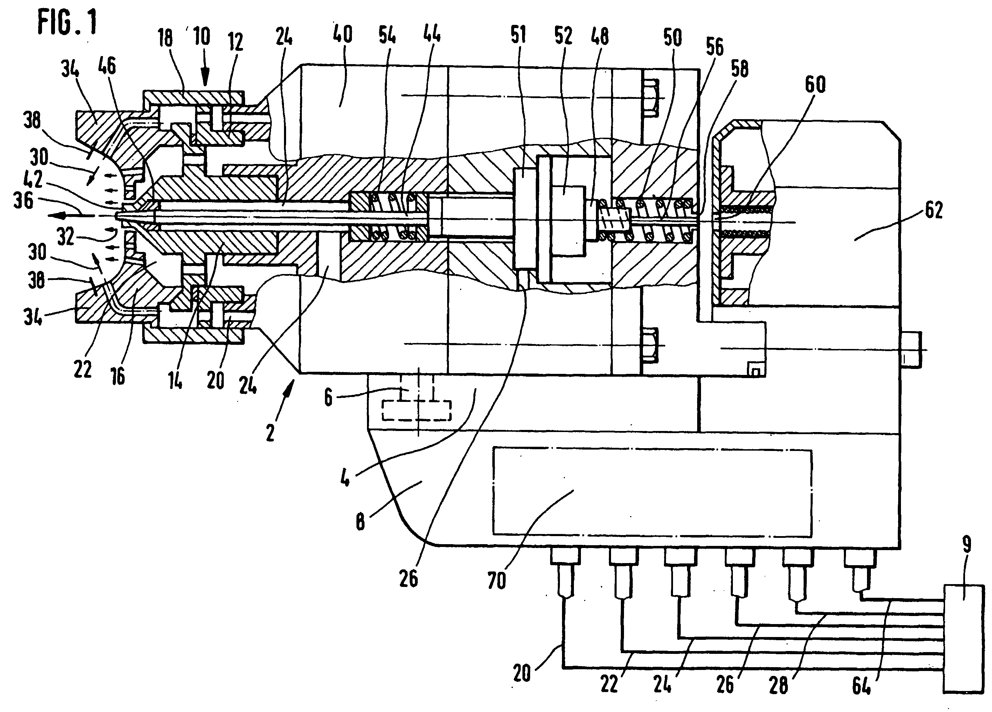

In Fig. 1 ist eine Sprühbeschichtungseinrichtung mit einer Sprühvorrichtung 2 dargestellt, welche auf einem Träger 4 durch einen Dreh-Spannverschluß 6 montiert ist. Mit einem Adapter 8 kann die Sprühvorrichtung 2 an einem Roboter, Hubständer, Handgriff oder anderen Träger (nicht dargestellt) angebaut werden. Die Sprühvorrichtung wird von einem Steuergerät 9 gesteuert, welches an einer von ihr entfernten Stelle angeordnet ist, beispielsweise im Steuerteil eines Roboters oder in einem Schaltschrank.

Die Sprühvorrichtung kann zum Sprühen von flüssigem oder pulverförmigem Beschichtungsmaterial ausgebildet sein. Fig. 1 zeigt im Axialschnitt als Beispiel eine Sprühvorrichtung 2 für Beschichtungsflüssigkeit. Ein Düsenkopf 10 der Sprühvorrichtung 2 enthält einen Trennring 12 und ein Düsenelement 14, welche einen Fluidkanal 20 für Formungsluft 30 und einen Fluidkanal 22 für Zerstäuberluft 32 voneinander trennt. Vorsprünge oder Hörner 34 eines Luftverteilers 16 bilden das Ende des Formungsluft-Fluidkanals 20 und lenken die Formungsluft 30 auf den zerstäubten Beschichtungsmaterialstrahl 36, um ihn von einer runden in eine flache Querschnittsform umzuformen. Hochspannungselektroden 38 zur elektrostatischen Aufladung des Beschichtungsmaterials können in oder neben dem Luftstrom der Formungsluft 30 oder an geeigneter anderer Stelle angeordnet sein. Eine Überwurfmutter 18 hält die Elemente an einem Gehäuse 40 der Sprühvorrichtung 2.

Das Beschichtungsmaterial wird durch einen Fluidkanal 24 einer zentralen Sprühöffnung 42 am Düsenelement 14 zugeführt und dort versprüht, wenn eine Ventilnadel 44 von einem Ventilsitz 46 durch eine Betätigungseinrichtung 48 entgegen der Federkraft einer Vorspannfeder 50 abgehoben wird. Dieses Sprühdüsenventil 44, 46 wird durch die Vorspannfeder 50 geschlossen und kann entgegen ihrer Federkraft geöffnet werden durch Betätigungsdruckluft, wenn diese Betätigungsluft von dem Steuergerät 9 über einen Betätigungsluft-Fluidkanal 26 in eine Druckkammer 51 geleitet wird und dort einen Kolben 52 der Betätigungseinrichtung 48 entgegen der Vorspannfeder 50 nach rechts verschiebt. Die Ventilnadel 44 und der Kolben 52 werden durch eine weitere Feder 54 axial zusammengehalten, so daß sie jeweils zusammen axial bewegt werden. Bei geschlossenem Sprühdüsenventil 44, 46 kann das Beschichtungsmaterial durch einen Fluidkanal 28 rezirkuliert werden.

Auf dem Adapter 8 ist ein Sensor 62 befestigt, welcher mit einem an dem Kolben 52 befestigten Sensorstift 56 mechanisch, induktiv, kapazitiv oder optisch zusammenwirkt und dadurch die Axialpositionen der Ventilnadel 44, und damit auch die Offenstellung oder Schließstellung des Sprühdüsenventils 44, 46 erkennt und über einen Fernübertragungsweg 64, z.B. elektrische oder optische Leiter oder ein drahtloser Übertragungsweg dem Steuergerät 9 meldet.

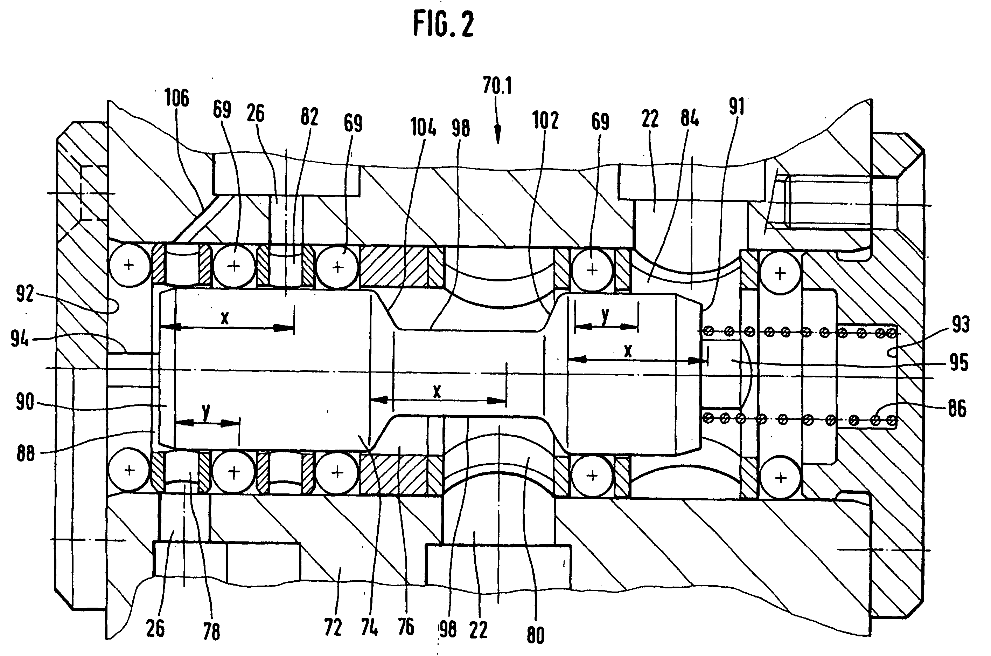

Die zu beschichtenden Objekte (nicht dargestellt) werden normalerweise von einer Transportvorrichtung automatisch an der Sprühvorrichtung 2 vorbeigeführt. Beim Wechsel von einem Objekt zu einem anderen Objekt wird die Zufuhr des Beschichtungsmaterials abgeschaltet, damit das Beschichtungsmaterial nicht an den Objekten vorbei in die Umgebung gespritzt wird. Dadurch muß die Beschichtungsvorrichtung während eines Arbeitstages sehr häufig eingeschaltet und ausgeschaltet werden. Wenn die einzelnen Fluidkanäle 20, 22, 24, 26 und 28 hierfür in dem Steuergerät 9 eingeschaltet und ausgeschaltet werden, hat man sehr lange Fluidkanal-Wege, durch welche Reaktionsverzögerungen entstehen. Zur Vermeidung dieses Nachteiles ist die Ventileinrichtung 70 nahe an oder in der Sprühvorrichtung 2 angeordnet, vorzugsweise in dem Adapter 8. Die Ventileinrichtung 70 hat außerdem den großen Vorteil, daß sie das Sprühdüsenventil 44, 46 jeweils erst dann öffnet, wenn bereits Zerstäuberluft 32 und Formungsluft 30 aus der Sprühvorrichtung 2 austreten, bzw. umgekehrt sie zuerst das Sprühdüsenventil 44, 46 schließt, bevor sie die Zerstäuberluft und die Formungsluft abschaltet. Damit wird mit Sicherheit alles aus dem Sprühdüsenventil 44, 46 austretende Beschichtungsmaterial ordnungsgemäß zerstäubt und es kann nicht in Tropfenform auf das zu beschichtende Objekt gelangen oder als Tropfen abfallen. Die Ventileinrichtung 70 hat den weiteren Vorteil, daß die von ihr gesteuerte Druckluft, welche das Sprühdüsenventil 44, 46 betätigt, auch die Ventileinrichtung 70 betätigt, ohne daß hierfür eine teuere elektromagnetische Mehr-Ventil-Anordnung oder eine teuere Computersteuerung im Steuergerät 9 erforderlich ist. Mehrere Ausführungsformen der Ventileinrichtung 70 werden im folgenden mit Bezug auf die Fig. 2 bis 8 beschrieben, in welchen die Ventileinrichtung 70 den verschiedenen Varianten entsprechend mit 70.1, 70.2, 70.3 und 70.4 durchnumeriert ist.

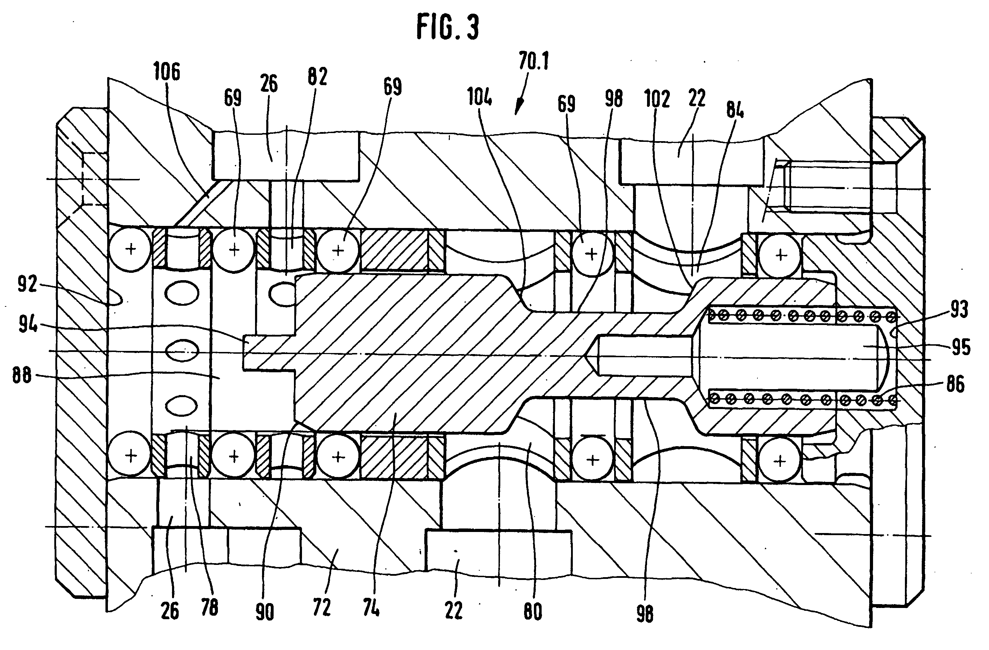

Die Ventileinrichtung 70.1 ist in Fig. 2 in Schließstellung und in Fig. 3 in Offenstellung dargestellt, zwischen welchen ein Ventil-Schieber 74 in einem Schieber-Führungskanal 76 eines Ventil-Gehäuses 72 um eine Strecke "x" in Schieberlängsrichtung axial verschiebbar ist. Der Schieber 74 ist gegen die Wand des Führungskanals 76 durch Dichtungsmittel, z.B. O-Ringe 69 abgedichtet. Ein Abschnitt des Betätigungsluftkanals 26 führt durch einen im Führungskanal 76 gebildeten Steuerdruckraum 88, in welchem der Druck der Betätigungsluft für das Sprühdüsenventil 44, 46 den Schieber 74 entgegen der Kraft einer Druckfeder 86 von der Schließstellung in Fig. 2 in die Offenstellung von Fig. 3 axial verschieben kann. Beim Abfallen des Druckes der Betätigungsluft wird der Schieber 74 von der Feder 86 von der Offenstellung in Fig. 3 in die Schließstellung von Fig. 2 zurückbewegt. Der Steuerdruckraum 88 ist zwischen einer Schieberstirnfläche 90 und einer inneren Gehäusestirnfläche 92 am einen Ende des Schiebers 74 gebildet. Die Druckfeder 86 ist am anderen Schieberende zwischen eine entgegengesetzt gerichtete Schieberstirnfläche 91 und eine ihr gegenüberliegende innere Gehäusestirnfläche 93 eingespannt. Die Axialbewegungen des Schiebers 74 werden durch Anschläge 94 und 95 begrenzt.

Der Führungskanal 76 hat im Gehäuse 72 im Bereich des Steuerdruckraums 88 einen Fluideinlaß 78 und einen Fluidauslaß 82 des Betätigungsluftkanals 26. Der Fluideinlaß 78 ist in jeder axialen Position des Schiebers 74 zum Steuerdruckraum 88 hin offen und könnte deshalb anstelle in der dargestellten Seitenwand auch in der Gehäusestirnfläche 92 gebildet sein, welche bei allen axialen Positionen des Schiebers 74 der Schieberstirnfläche 90 mit axialem Abstand gegenüberliegt und den Steuerdruckraum 88 begrenzt. Durch diesen Abstand ist sichergestellt, daß die Betätigungsdruckluft durch ihren Fluideinlaß 78 bei allen axialen Schieberpositionen in den Steuerdruckraum 88 gelangen kann. Der Fluidauslaß 82 des Betätigungsluftkanals 26 ist mit größerem axialem Abstand als der Fluideinlaß 78 von der den Steuerdruckraum 88 begrenzenden Schieberstirnfläche 90 angeordnet, bezogen auf die in Fig. 2 dargestellte Schließstellung des Schiebers 74.

Mit größerem axialem Abstand von der den Steuerdruckraum 88 begrenzenden Schieberstirnfläche 90 als der Betätigungsluft-Fluidauslaß 82 ist der Führungskanal 76 mit mindestens einem weiteren Fluideinlaß 80 und mindestens einem weiteren Fluidauslaß 84 versehen, welche in der in Fig. 2 gezeigten Schließstellung voneinander getrennt und in der in Fig. 3 gezeigten Offenstellung miteinander verbunden sind und einen durch die Ventileinrichtung 70.1 hindurchführenden weiteren Abschnitt für eines der anderen Fluide bilden. Zur Beschreibung des Ausführungsbeispieles wird angenommen, daß dieses weitere Fluid Zerstäuberluft des Zerstäuberluftkanals 22 ist. Statt dessen könnte es auch der Formungsluftkanal 20 oder ein anderer Luftkanal zur Zufuhr von Luft zur Sprühvorrichtung 2 sein. Es gibt Sprühvorrichtungen 2, die ohne Zerstäuberluft und mit oder ohne Formungsluft arbeiten, oder mit Luft, welche über Außenflächen der Sprühvorrichtung 2 strömt, um sie sauber zu halten. Der Fluideinlaß 80 und Fluidauslaß 84 des Zerstäuberluftkanals haben einen kleineren axialen Abstand "y" voneinander als der Fluidauslaß 82 vom Fluideinlaß 78 des Betätigungsluftkanals 26. Zwischen den Einlässen 78 und 80 einerseits und ihren Auslässen 82 und 84 andererseits befindet sich je eines der Dichtungsmittel 69, damit sie bei der in Fig. 2 gezeigten-Schließstellung voneinander getrennt sind. Durch die unterschiedlichen axialen Abstände "x" und "y" wird erreicht, daß bei Bewegung des Schiebers 74 von der Schließstellung von Fig. 2 in die Offenstellung von Fig. 3 zuerst der Fluideinlaß 80 mit dem Fluidauslaß 84 des Zerstäsuberluftkanals 22 nach der kurzen Wegstrecke "y" über einen im Schieber 74 gebildeten Verbindungsabschnitt 98 miteinander strömungsmäßig verbunden werden, bevor der Fluideinlaß 78 mit dem Fluidauslaß 82 des Betätigungsluftkanals 26 nach der längeren Wegstrecke "x" miteinander verbunden werden.

Umgekehrt wird erreicht, wenn der Schieber 74 von der Offenstellung von Fig. 3 in die Schließstellung von Fig. 2 bewegt wird, daß er an seiner den Steuerdruckraum 88 begrenzenden Schieberstirnfläche 90 zuerst den Fluidauslaß 82 vom Fluideinlaß 78 des Betätigungsluftkanals 26 trennt, bevor der Steuerschieber 74 den Fluidauslaß 84 vom Fluideinlaß 80 des Zerstäuberluftkanals 22 trennt. Damit ist sichergestellt, daß vor, während und nach der Abgabe von Beschichtungsmaterial an der Sprühöffnung 42 der Sprühvorrichtung 2 auch das weitere Fluid, im vorliegenden Falle Zerstäuberluft des Zerstäuberluftkanals 22 vorhanden ist und für eine ordnungsgemäße Zerstäubung des Beschichtungsmaterials sorgt. Der im Schieber 74 gebildete Verbindungsabschnitt 98 hat ein dem Fluidauslaß 84 des Zerstäuberluftkanals 22 axial näher gelegenes Ende 102 und ein axial in Richtung zur Kolbenstirnfläche 90 der Steuerdruckkammer hin axial weiter entferntes Ende 104. Diese beiden Enden 102 und 104 liegen axial soweit auseinander, daß der Verbindungsabschnitt 98 bei allen axialen Positionen des Schiebers 74 mit dem Fluideinlaß 80 des Zerstäuberluftkanals 22 strömungsmäßig verbunden ist. Gemäß einer anderen Anwendung kann der Fluidauslaß 84 als Fluideinlaß, und der Fluideinlaß 80 als Fluidauslaß des weiteren Fluidkanals 22 dienen, d.h. ihre Leitungsanschlüsse des Fluidkanals 22 können vertauscht werden.

Der Verbindungsabschnitt 98 ist vorzugsweise entsprechend den Fig. 2 und 3 eine im Schieber 74 gebildete Ringnut, deren axiale Länge zwischen ihren Endflächen 102 und 104 mindestens so groß ist wie die kurze Wegstrecke "y" plus der axialen Breite des Fluideinlasses 80 und/oder des Fluidauslasses 84 des zugehörigen Fluidkanals 22.

Ein Bypass 106 ist als enger Drosselkanal ausgebildet und verbindet den Fluidauslaß 82 des Betätigungsluftkanals 26 unter Umgehung des Schiebers 74 in allen axialen Schieberpositionen mit dem Steuerdruckraum 88. Dadurch kann sich an diesem Fluidauslaß 82 der Druck der Betätigungsluft in die Steuerdruckkammer 88 hinein abbauen, wenn dieser Fluidauslaß 82 des Betätigungsluftkanals 26 durch den Schieber 64 verschlossen wird, wenn dieser von der Offenstellung von Fig. 3 in die Schließstellung von Fig. 2 axial bewegt wird.

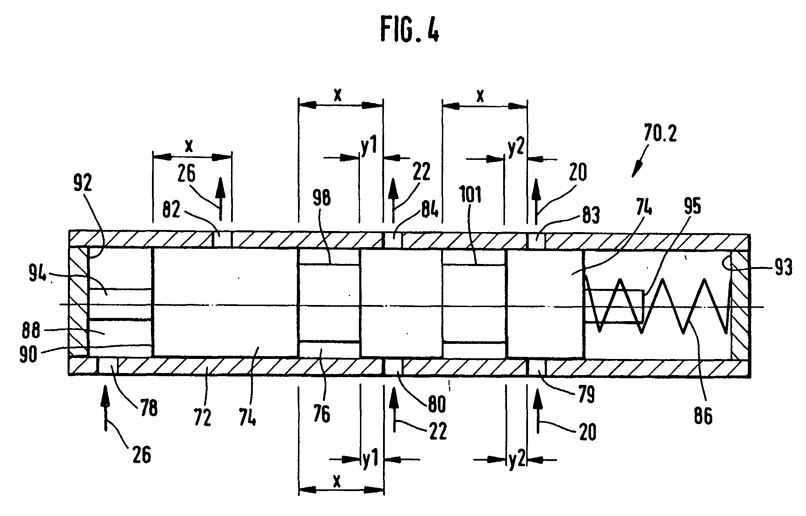

Fig. 4 zeigt eine weitere Ausführungsform 70.2 der Ventileinrichtung. Sie entspricht im Prinzip der Ausführungsform nach den Fig. 1 und 2, weshalb gleiche Teile mit gleichen Bezugszahlen versehen sind. Ihr wesentlicher Unterschied besteht darin, daß zusätzlich zum Betätigungsluftkanal 26 nicht nur ein weiterer, sondern zwei weitere Fluidkanäle durch sie hindurchgeführt sind, im vorliegenden Beispiel der Zerstäuberluftkanal 22 und der Formungsluftkanal 20. Der axiale Bewegungsweg des Schiebers 74 für das Verbinden und Trennen des Fluideinlasses 80 und des Fluidauslasses 84 des Zerstäuberluftkanals 22 ist mit "y1" bezeichnet, und der axiale Bewegungsweg des Schiebers 74 zum Verbinden oder Trennen des Fluideinlasses 79 vom Fluidauslaß 83 des Formungsluftkanals 20 ist mit "y2" bezeichnet. Die axialen Längen der beiden Bewegungswege "y1" und "y2" können gleich oder unterschiedlich sein und sind je wesentlich kürzer als der axiale Bewegungsweg "x" des Schiebers 74 . zum Verbinden oder Trennen des Fluideinlasses 78 und des Fluidauslasses 82 des Betätigungsluftkanals 26 miteinander bzw. voneinander. Der im Schieber 74 gebildete Verbindungsabschnitt des Formungsluftkanals 20 ist in Fig. 4 mit 101 bezeichnet.

Wie Fig. 4 zeigt, kann der Fluideinlaß 80 dem Fluidauslaß 84 des Zerstäuberluftkanals 22 diametral zum Führungskanal 76 gegenüberliegen, und der Fluideinlaß 79 kann dem Fluidauslaß 83 diametral gegenüberliegen.

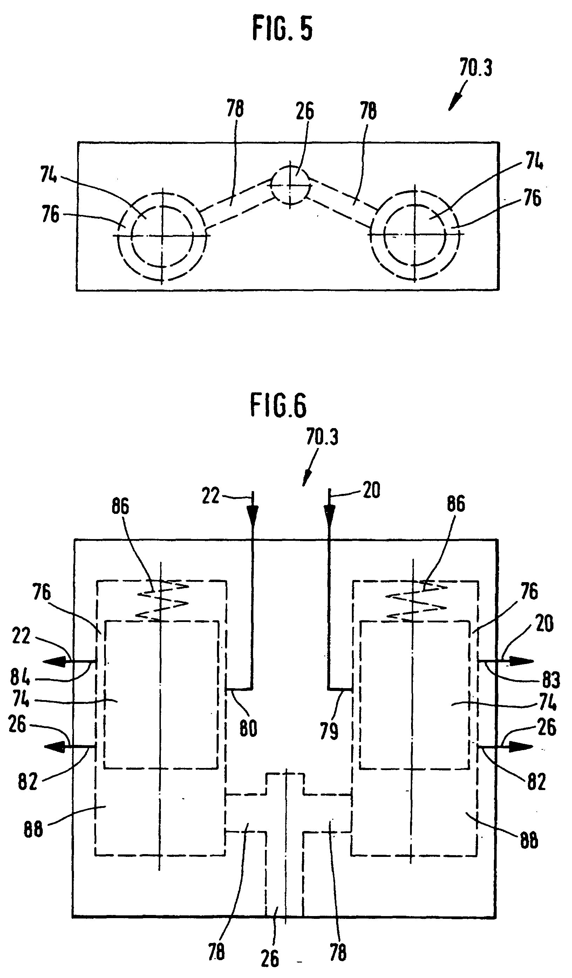

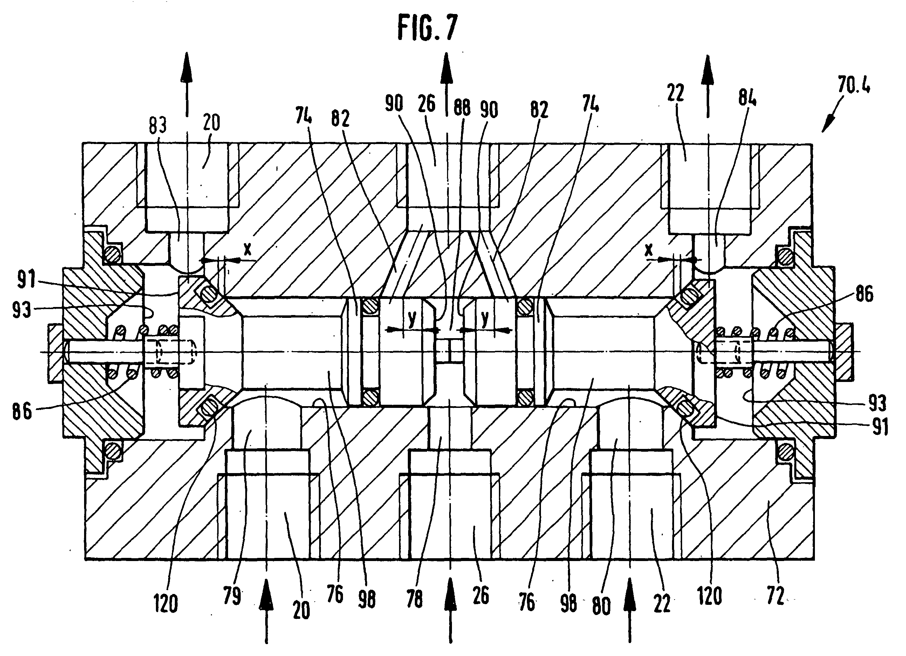

Bei der dritten Ausführungsform einer Ventileinrichtung 70.3 nach den Fig. 5 und 6 sind zwei Ventileinrichtungen nach den Fig. 2 und 3 parallel nebeneinander angeordnet, eine für den Zerstäuberluftkanal 22 und eine für den Formungsluftkanal 20 von Fig. 4. Ihre Steuerdruckräume 88 sind strömungsmäßig parallel geschaltet, wobei die Fluideinlässe 78 am stromaufwärtigen Zweig des Betätigungsluftkanals 26 miteinander verbunden sind, und die Fluidauslässe 82 am stromabwärtigen Zweig des Betätigungsluftkanals 26 miteinander verbunden sind.

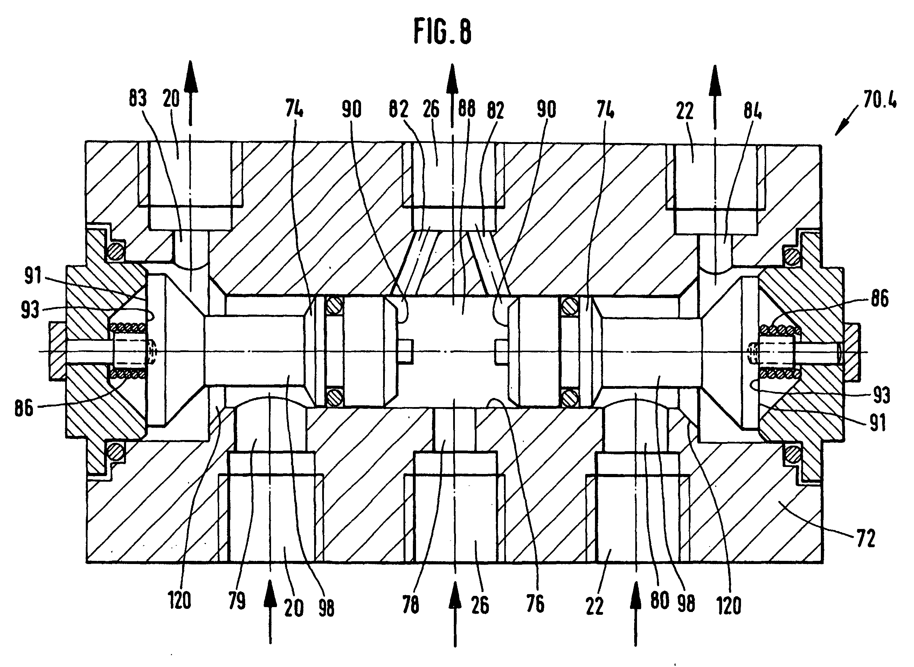

Bei der in Fig. 7 in Schließstellung und in Fig. 8 in Offenstellung dargestellten Doppel-Ventileinrichtung 70.4 sind zwei Schieber 74 entgegengesetzt zueinander in einem gemeinsamen Führungskanal 76 angeordnet, derart, daß sie einen gemeinsamen Steuerdruckraum 88 haben, der axial beidseitig je von einer Schieberstirnfläche 90 eines der beiden Schieber 74 axial begrenzt wird. Der kleinste axiale Abstand der Schieberstirnflächen 90 voneinander wird durch ihre Anschläge 94 definiert, welche bei der in Fig. 7 dargestellten Schließstellung axial aneinander anliegen. Die Druckfedern 86 sind an den entgegengesetzt zueinander wegragenden äußeren Stirnflächen 91 der Schieber 74 angeordnet. Der Steuerdruckraum 88 hat nur einen einzigen Fluideinlaß 78 auf der stromaufwärtigen Seite des Betätigungsluftkanals 26, jedoch zwei Fluidauslässe 82 auf der stromabwärtigen Seite des Betätigungsluftkanals 26, von welchen jeder einem anderen der beiden Schieber 74 zugeordnet ist. Im axialen Bereich des rechten Steuerschiebers 74 ist ein Fluideinlaß 80 und ein Fluidauslaß 84 des Zerstäuberluftkanals 22 im Gehäuse 72 gebildet, zwischen welchen dieser Schieber 74 und das Gehäuse 72 ein Ventil 120 bilden, welches vom rechten Schieber 74 jeweils geöffnet wird, bevor er den Durchgang zwischen Fluideinlaß 78 und Fluidauslaß 82 des Betätigungsluftkanals 26 öffnet, wenn er von der in Fig. 7 gezeigten Schließstellung nach rechts in die in Fig. 8 gezeigte Offenstellung bewegt wird. Umgekehrt wird die durch den Steuerdruckraum 88 führende Verbindung des Fluideinlasses 78 mit dem Fluidauslaß 82 vom rechten Schieber 74 unterbrochen, bevor er das Ventil 120 schließt, wenn er von der Offenstellung von Fig. 8 in die Schließstellung von Fig. 7 nach links bewegt wird. Entsprechend wie dieser rechts dargestellte Schieber 74 arbeitet auch der in den Fig. 7 und 8 links dargestellte Schieber 74. Er verbindet den Fluideinlaß 79 mit dem Fluidauslaß 83 des Formungsluftkanals 20 strömungsmäßig, bevor er den Fluideinlaß 78 mit dem Fluidauslaß 82 des Betätigungsfluidkanals 26 verbindet, wenn er von der Schließstellung von Fig. 7 in die Offenstellung von Fig. 8 nach links bewegt wird. Ferner unterbricht der links dargestellte Schieber 74 zuerst die Verbindung zwischen dem Fluideinlaß 78 und dem Fluidauslaß 82 des Betätigungsluftkanals 26, bevor er die Verbindung zwischen dem Flüideinlaß 79 und dem Fluidauslaß 83 des Formungsluftkanals 20 unterbricht, wenn er von der Offenstellung von Fig. 8 in die Schließstellung von Fig. 7 nach rechts bewegt wird, wenn der Druck der Betätigungsluft im Steuerdruckraum 88 soweit abfällt, daß die Druckfeder 86 stärker ist. Die Druckfedern 86 der beiden Schieber 74 können derart ausgebildet sein, daß beide Schieber 74 jeweils gleichzeitig um gleiche oder unterschiedliche axiale Strecken in Offenstellungs-Richtung oder in Schließstellungs-Richtung bewegt werden.

Bei allen Ausführungsformen schaltet das Steuergerät 9 bei Arbeitsbeginn die Druckluft (Betätigungsluft, Formungsluft, Zerstäuberluft) von allen Fluidkanälen, und vorzugsweise auch die Zufuhr des Beschichtungsmaterials zum Sprühdüsenventil 44, 46, gleichzeitig ein, und bei Arbeitsende alle wieder gleichzeitig ab. Für das temporäre Einschalten und Ausschalten nur des Sprühbetriebes zwischen Arbeitsbeginn und Arbeitsende wird vom Steuergerät 9 nur die Betätigungsluft des Fluidkanals 26 eingeschaltet und ausgeschaltet, während es alle anderen Fluide eingeschaltet läßt.

Die Ventileinrichtungen 70.1, 70.2, 70.3 und 70.4 können nicht nur für Sprüheinrichtungen, sondern auch für andere Einrichtungen und andere Zwecke als die beschriebenen verwendet werden.

## Patentansprüche

1. Sprühbeschichtungseinrichtung mit einer Sprühvorrichtung und mit mindestens zwei Fluidwegen, welche an die Sprühvorrichtung angeschlossen sind, wobei
mindestens zwei der Fluidwege (26, 22; 26, 22, 20) durch eine Ventileinrichtung (70) hindurchgehen, die einen Schieber (74) in einem Führungskanal (76) zum Öffnen und Schließen dieser Fluidwege aufweist, **dadurch gekennzeichnet, daß** ein Abschnitt eines ersten Fluidweges (26) dieser Fluidwege ein im Führungskanal (76) gebildeter Steuerdruckraum (88) ist, in welchem der Druck eines Fluides des ersten Fluidweges (26) den Schieber (74) entgegen der Kraft eines Federmittels (86) von einer Schließstellung in eine Offenstellung bewegen kann;
daß der Steuerdruckraum (88) in Schieberlängsrichtung einerseits von einer fluidgesteuerten Schieberstirnfläche (90) und andererseits von einer von diesem Schieber (74) getrennten Gegenfläche (90, 92) begrenzt ist;
daß der Steuerdruckraum (88) in einem Gehäuse (72) des Führungskanals (76) einen Fluideinlaß (78) und einen Fluidauslaß (82) des ersten Fluidweges (26) aufweist, von welchem der Fluideinlaß (78) in jeder Position des Schiebers (74) zur fluidgesteuerten Schieberstirnfläche (90) offen ist, wohingegen der Schieber (74) in seiner Schließstellung den Fluidauslaß (82) zudeckt und in seiner Offenstellung den Fluidauslaß (82) in den Steuerdruckraum (88) hinein freigibt;
daß in Schließstellung des Schiebers (74) der Abstand der fluidgesteuerten Schieberstirnfläche (90) vom Fluidauslaß (82) des ersten Fluidweges (26) größer ist als der Abstand eines durch den Schieber (74) hindurchgehenden Verbindungsabschnittes (98) mindestens eines zweiten Fluidweges (22, 20) der Fluidwege von einem im Führungskanal (76) gebildeten Fluideinlaß (80, 79) und/oder Fluidauslaß (84, 83) dieses zweiten Fluidweges (22, 20), derart, daß bei Bewegung des Schiebers (74) von der Schließstellung in die Offenstellung zuerst der zweite Fluidweg (22, 20) geöffnet wird, bevor dann der erste Fluidweg (26) geöffnet wird, während bei umgekehrter Bewegung des Schiebers (74) von der Offenstellung in die Schließstellung zuerst der erste Fluidweg (26) geschlossen wird, bevor dann der zweite Fluidweg (22, 20) geschlossen wird.

2. Sprühbeschichtungseinrichtung nach Anspruch 1,
**dadurch gekennzeichnet,**
**daß** der Verbindungsabschnitt (98) am Umfang des Schiebers (74) gebildete Ausnehmungen aufweist, die in Schieberlängsrichtung länger sind als der Fluideinlaß (80, 79) und/oder der Fluidauslaß (84, 83) des zweiten Fluidweges (22, 20).

3. Sprühbeschichtungseinrichtung nach einem der vorhergehenden Ansprüche,
**dadurch gekennzeichnet,**
**daß** das Federmittel (86) an dem von der fluiddruckgesteuerten Schieberstirnfläche (90) abgewandten Ende des Schiebers (74) angeordnet ist.

4. Sprühbeschichtungseinrichtung nach einem der vorhergehenden Ansprüche,
**dadurch gekennzeichnet,**
**daß** im Schieber (74) mindestens zwei Verbindungsabschnitte (98) zur Verbindung oder Trennung von Fluideinlässen (80, 79) und Fluidauslässen (84, 83) von mindestens zwei der zweiten Fluidwege (22, 20) vorgesehen sind.

5. Sprühbeschichtungseinrichtung nach einem der vorhergehenden Ansprüche,
**dadurch gekennzeichnet,**
**daß** die Gegenfläche eine Stirnfläche (92) des Gehäuses (72) ist.

6. Sprühbeschichtungseinrichtung nach einem der Ansprüche 1 bis 4,
**dadurch gekennzeichnet,**
**daß** die Gegenfläche eine fluiddruckgesteuerte Schieberstirnfläche (90) eines weiteren Schiebers (74) ist, der entgegengesetzt zum einen Schieber (74) angeordnet ist und dadurch vom gleichen Fluid des ersten Fluidweges (26) im Steuerdruckraum (88) entgegen der Kraft eines weiteren Federmittels (86) gesteuert wird, um mindestens einen zweiten Fluidweg (22, 20) zeitlich jeweils vor dem ersten Fluidweg (26) zu öffnen oder nach dem ersten Fluidweg (26) zu schließen.

7. Sprühbeschichtungseinrichtung nach einem der vorhergehenden Ansprüche,
**dadurch gekennzeichnet,**
**daß** mindestens zwei Steuerdruckräume (88) vorgesehen sind, die je von mindestens einem Schieber (74) in der genannten Art und Weise begrenzt sind, daß der erste Fluidweg (26) über parallele Wegabschnitte (78) durch alle Steuerdruckräume (88) geführt ist, welche je einen Fluideinlaß (78) und einen Fluidauslaß (82) für jeden dieser parallelen Wegabschnitte des ersten Fluidweges (26) haben.

8. Sprühbeschichtungseinrichtung nach einem der vorhergehenden Ansprüche,
**dadurch gekennzeichnet,**
**daß** die Ventileinrichtung in einem Adapter (8) untergebracht ist, über welchen die Sprühvorrichtung (2) an einem Träger befestigbar ist.

9. Sprühbeschichtungseinrichtung nach Anspruch 8,
**dadurch gekennzeichnet,**
**daß** die Sprühvorrichtung (2) und der Adapter (8) durch eine Schnellverbindungsvorrichtung (6) lösbar miteinander verbunden sind.

10. Sprühbeschichtungseinrichtung nach einem der vorhergehenden Ansprüche,
**dadurch gekennzeichnet,**
**daß** der erste Fluidweg (26) stromabwärts seines Fluidauslasses (82) mit einem Druckraum (51) zur pneumatischen Betätigung eines Beschichtungsmaterial-Ventils (44, 46) verbunden ist, welches in der Sprühvorrichtung (2) untergebracht ist und zur Freigabe oder Unterbrechung eines Beschichtungsmaterialstromes von Druckluft des ersten Fluidweges (26) betätigbar ist.

## Claims

1. Spray coating device having a spray device and having at least two fluid channels which are connected to the spray device, wherein
at least two of the fluid channels (26, 22; 26, 22, 20) go through a valve device (70) which possesses a slide (74) in a guide channel (76) for opening and closing this fluid channel, **characterised in that** a section of a first fluid channel (26) of these fluid channels is a control pressure chamber (88) constructed in the guide channel (76) in which the pressure of a fluid of the first fluid channel (26) can move the slide (74) against the force of a springing means (86) from a closed position into an open position;
that the control pressure chamber (88) is bounded in the longitudinal direction of the slide by a fluid-controlled slide end face (90), on the one hand, and by an opposing surface (90, 92) separated from this slide (74), on the other hand;
that the control pressure chamber (88) in a housing (72) of the guide channel (76) has a fluid inlet (78) and a fluid outlet (82) of the first fluid channel (26) from which the fluid inlet (78) is open in each position of the slide (74) to the fluid-controlled slide end face (90), whereas the slide (74) in its closed position covers the fluid outlet (82) and in its open position opens the fluid outlet (82) into the control pressure chamber (88);
that in the closed position of the slide (74) the distance of the fluid-controlled slide end face (90) from the fluid outlet (82) of the first fluid channel (26) is greater than the distance of a connecting section (98) passing through the slide (74) of at least a second fluid channel (22, 20) of the fluid channels from a fluid inlet (80, 79) and/or fluid outlet (84, 83) of this second fluid channel (22, 20) in such a way that on moving the slide (74) from the closed position into the open position the second fluid channel (22, 20) is first of all opened before the first fluid channel (26) is then opened while on moving the slide (74) in the opposite direction from the open position into the closed position the first fluid channel (26) is first of all closed before the second fluid channel (22, 20) is then closed.

2. Spray coating device according to Claim 1, **characterised in that** the connecting section (98) has recesses formed at the perimeter of the slide (74) which are longer in the longitudinal direction of the slide than the fluid inlet (80, 79) and/or the fluid outlet (84, 83) of the second fluid channel (22, 20).

3. Spray coating device according to one of the preceding claims, **characterised in that** the springing means (86) is arranged at the end of the slide (74) facing away from the slide end face (90) controlled by fluid pressure.

4. Spray coating device according to one of the preceding claims, **characterised in that** in the slide (74) at least two connecting sections (98) are provided for connecting or isolating fluid inlets (80, 79) and fluid outlets (84, 83) of at least two of the second fluid channels (22, 20).

5. Spray coating device according to one of the preceding claims, **characterised in that** the opposing surface is an end face (92) of the housing (72).

6. Spray coating device according to one of Claims 1 to 4, **characterised in that** the opposing surface is a slide end face (90) controlled by fluid pressure of another slide (74) which is arranged in opposition to the first slide (74) and by this means is controlled by the same fluid of the first fluid channel (26) in the control pressure chamber (88) against the force of another springing means (86) in order to open at least one second fluid channel (22, 20) prior to the first fluid channel (26) in each case and to close it//them after the first fluid channel (26).

7. Spray coating device according to one of the preceding claims, **characterised in that** at least two control pressure chambers (88) are provided which are each bounded by at least one slide (74) in said manner, that the first fluid channel (26) passes via parallel channel sections (78) through all control pressure chambers (88) which each have a fluid inlet (78) and a fluid outlet (82) for each of these parallel channel sections of the first fluid channel (26).

8. Spray coating device according to one of the preceding claims, **characterised in that** the valve device is accommodated in an adapter (8) through which the spray device (2) is fastenable to a support.

9. Spray coating device according to Claim 8, **characterised in that** the spray device (2) and the adapter (8) are detachably connected to one another by means of a quick-release coupling device (6).

10. Spray coating device according to one of the preceding claims, **characterised in that** the first fluid channel (26) is connected downstream from its fluid outlet (82) to a pressure chamber (51) for the pneumatic operation of a coating material valve (44, 46) which is accommodated in the spray device and is operable by compressed air from the first fluid channel (26) to release or cut off a stream of coating material.

## Revendications

1. Appareil de revêtement par pulvérisation comportant un dispositif de pulvérisation et au moins deux voies de fluide reliées à ce dispositif, et dans lequel au moins deux des voies de fluide (26, 22 ; 26, 22, 20) traversent un distributeur (70) qui présente un tiroir (74) dans un canal de guidage (76) pour l'ouverture et la fermeture de ces voies de fluide,
**caractérisé par le fait**
**qu'**une partie d'une première voie de fluide (26) de ces voies de fluide est un espace à pression de pilotage (88) formé dans le canal de guidage (76) et dans lequel la pression d'un fluide de la première voie de fluide (26) peut déplacer le tiroir (74) d'une position fermée à une position ouverte contre l'action d'un moyen élastique (86),
**que** l'espace à pression de pilotage (88) est limité dans la direction longitudinale du tiroir d'une part par une face frontale (90) du tiroir commandée par fluide et d'autre part par une face opposée (90, 92) séparée du tiroir (74),
**que** l'espace à pression de pilotage (88) présente dans un corps (72) du canal de guidage (76) une entrée de fluide (78) et une sortie de fluide (82) de la première voie de fluide (26), par laquelle, dans toute position du tiroir (74), l'entrée de fluide (78) est ouverte vers la face frontale (90) du tiroir commandée par fluide, tandis que le tiroir (74), en position fermée, obture la sortie de fluide (82) et, en position ouverte, dégage la sortie de fluide (82) vers l'espace à pression de pilotage (88),
**que** lorsque le tiroir (74) est en position fermée, la distance entre la face frontale (90) du tiroir commandée par fluide et la sortie de fluide (82) de la première voie de fluide (26) est supérieure à la distance entre une partie de liaison (98), traversant le tiroir (74), d'au moins d'une deuxième voie de fluide (22, 20) des voies de fluide et une entrée de fluide (80, 79) et/ou une sortie de fluide (84, 83), formée dans le canal de guidage (76), de cette deuxième voie de fluide (22, 20), de façon telle qu'en cas de mouvement du tiroir (74) de sa position fermée à sa position ouverte soient ouvertes d'abord la deuxième voie de fluide (22, 20) et ensuite la première voie de fluide (26), tandis qu'en cas de mouvement inverse du tiroir (74) de sa position ouverte à sa position fermée soient fermées d'abord la première voie de fluide (26) et ensuite la deuxième voie de fluide (22, 20).

2. Appareil de revêtement par pulvérisation selon la revendication 1, **caractérisé par le fait que** la partie de liaison (98) présente des évidements formés sur le pourtour du tiroir (74) qui, dans la direction longitudinale du tiroir, sont plus longs que l'entrée de fluide (80, 79) et/ou la sortie de fluide (84, 83) de la deuxième voie de fluide (22, 20).

3. Appareil de revêtement par pulvérisation selon l'une des revendications précédentes, **caractérisé par le fait que** le moyen élastique (86) est placé à l'extrémité du tiroir (74) opposée à la face frontale (90) du tiroir commandée par pression de fluide.

4. Appareil de revêtement par pulvérisation selon l'une des revendications précédentes, **caractérisé par le fait que** dans le tiroir (74) sont prévues au moins deux parties de liaison (98) pour la liaison ou la séparation d'entrées de fluide (80, 79) et de sorties de fluide (84, 83) d'au moins deux des deuxièmes voies de fluide (22, 20).

5. Appareil de revêtement par pulvérisation selon l'une des revendications précédentes, **caractérisé par le fait que** la face opposée est une face frontale (92) du corps (72).

6. Appareil de revêtement par pulvérisation selon l'une des revendications 1 à 4, **caractérisé par le fait que** la face opposée est une face frontale (90) commandée par pression de fluide d'un autre tiroir (74) qui est opposé au premier tiroir (74) et est par là commandé par le même fluide de la première voie de fluide (26) dans l'espace à pression de pilotage (88) contre l'action d'un autre moyen élastique (86) pour ouvrir au moins une deuxième voie de fluide (22, 20) avant la première voie de fluide (26) et fermer celle-ci après la première voie de fluide (26).

7. Appareil de revêtement par pulvérisation selon l'une des revendications précédentes, **caractérisé par le fait qu'**il est prévu au moins deux espaces à pression de pilotage (88) qui sont limités chacun par au moins un tiroir (74) de la manière précitée, que la première voie de fluide (26) traverse par des parties de voie parallèles (78) tous les espaces à pression de pilotage (88), qui ont chacun une entrée de fluide (78) et une sortie de fluide (82) pour chacune de ces parties parallèles de la première voie de fluide (26).

8. Appareil de revêtement par pulvérisation selon l'une des revendications précédentes, **caractérisé par le fait que** le distributeur est monté dans un adaptateur (8) par lequel le dispositif de pulvérisation (2) peut être fixé à un support.

9. Appareil de revêtement par pulvérisation selon la revendication 8, **caractérisé par le fait que** le dispositif de pulvérisation (2) et l'adaptateur (8) peuvent être assemblés de manière démontable par un dispositif d'assemblage rapide (6).

10. Appareil de revêtement par pulvérisation selon l'une des revendications précédentes, **caractérisé par le fait que** la première voie de fluide (26) est reliée en aval de sa sortie de fluide (82) à un espace sous pression (51) pour la manoeuvre pneumatique d'une soupape à matière de revêtement (44, 46) qui est montée dans le dispositif de pulvérisation (2) et, pour la libération ou l'interruption d'un courant de matière de revêtement, peut être manoeuvrée par de l'air comprimé de la première voie de fluide (26).
